# EUROPÄISCHE PATENTSCHRIFT

(11) **EP 2 984 321 B1**
(45) Veröffentlichungstag und Bekanntmachung des Hinweises auf die Patenterteilung: **26.04.2017**
(21) Anmeldenummer: 14705999.2
(22) Anmeldetag: 12.02.2014
(51) Int. Cl.: F02D 19/08, F02D 19/06, F02D 41/14, F02D 41/30, F02D 41/04

(54) **VERFAHREN ZUR IDENTIFIKATION VON KRAFTSTOFFGEMISCHEN**
METHOD FOR IDENTIFYING FUEL MIXTURES
PROCÉDÉ D'IDENTIFICATION DE MÉLANGES DE CARBURANTS

(30) Priorität: 12.04.2013 DE 102013206552
(43) Veröffentlichungstag der Anmeldung: 17.02.2016
(73) Patentinhaber: Robert Bosch GmbH, 70442 Stuttgart (DE)
(72) Erfinder: HAMEDOVIC, Haris, 71696 Moeglingen (DE); GUTSCHER, Andreas, 71706 Markgroeningen (DE); KRUSCH, Andrea, 71634 Ludwigsburg (DE); POSSELT, Andreas, 75417 Muehlacker (DE); LORENZ, Marko, 71723 Grossbottwar (DE)
(86) Internationale Anmeldenummer: PCT/EP2014/052707
(87) Internationale Veröffentlichungsnummer: WO 2014/166653

(56) Entgegenhaltungen:
- EP-A1- 2 060 761

## Beschreibung

### Stand der Technik

Die Erfindung betrifft eine Brennkraftmaschine nach dem Oberbegriff des Anspruchs 1.

Solche Brennkraftmaschinen sind allgemein bekannt und werden betrieben, indem man dem Brennraum während des Ansaugtakts ein Luft-Kraftstoff-Gemisch zuführt. Zur Erzeugung des Luft-Kraftstoff-Gemischs spritzen und zerstäuben Einspritzventile eine vorbestimmte Menge an Kraftstoff in ein Saugrohr, das über eine Einlassöffnung mit dem Brennraum verbunden ist. Eine im Saugrohr angeordnete Drosselklappe bestimmt dabei welche Frischluftmenge in Richtung des Brennraums angesaugt wird. Mit dem Öffnen der Drosselklappe wird eine Druckerhöhung im Saugrohr verursacht, wodurch die Verdampfungsneigung des eingespritzten Kraftstoffs gemindert wird. Zusammen mit Kraftstoff, der beispielsweise vom Einspritzventil an die Saugrohrwand gespritzt wird, lagert sich Kraftstoff auch auf Grund der verringerten Verdampfungsneigung beim Öffnen der Drosselklappe an der Saugrohrwand an. Im Falle des Schließens der Drosselklappe wird im Saugrohr der Druck erniedrigt, die Verdampfungsneigung steigt und an der Wand angelagerter Kraftstoff verdampft in das Saugrohr, wodurch das Luft-Kraftstoff-Gemisch anfettet. In beiden Fällen unterscheidet sich die dem Brennraum zugeführte Kraftstoffmenge bzw. Ist-Kraftstoffmenge von der vorgesehenen Kraftstoffmenge bzw. der Sollkraftstoffmenge.

Es ist daher allgemein bekannt, die vorgesehene Kraftstoffmenge, die in das Saugrohr gespritzt wird, dahingehend abzustimmen, dass Verluste bzw. Zusatzmengen an Kraftstoff, die beispielsweise aus dem An- bzw. Ablagern des Kraftstoffs an der Wand resultieren, kompensiert werden. Erfolgt keine oder eine falsche Anpassung besteht die Gefahr, dass das Luft-Kraftstoff-Gemisch im Brennraum abmagert bzw. anfettet. Unter diesen Umständen kann es dann zu Leistungseinbrüchen bis hin zu Verbrennungsaussetzern kommen. Werden bei einer Kraftstoffeinspritzung die Verlust- bzw. Zusatzmengen an Kraftstoff berücksichtigt und die eingespritzte Kraftstoffmenge angepasst, besteht hingegen die Möglichkeit, einen emissionsarmen und gleichmäßigen Betrieb der Brennkraftmaschine sicher zu stellen.

Ferner sind solche Brennkraftmaschinen bekannt, die mit einem Kraftstoffgemisch betrieben werden, wobei das Kraftstoffgemisch mehrere Kraftstoffsorten umfasst, oder mit einer von mehreren mögliche Kraftstoffsorten betrieben werden kann. Insbesondere sind solche Brennkraftmaschinen bekannt, für die ein Kraftstoffgemisch vorgesehen ist, das sie sich in einem unterschiedlichen Mischverhältnis aus Benzin und Alkoholen, insbesondere Ethanol und Methanol, zusammensetzt. Diese Brennkraftmaschinen sind unter anderem als FlexFuel-Brennkraftmaschine bekannt und erlauben, insbesondere auf Benzin als Kraftstoff zurückzugreifen, falls der bevorzugte Betrieb der Brennkraftmaschine mit Alkoholen nicht möglich ist. Eine solche Situation tritt beispielsweise dann auf, wenn die Verfügbarkeit von Alkoholen zeitlich oder lokal eingeschränkt ist. Die Fähigkeit mit verschiedenen Kraftstoffgemischen betrieben zu werden, erfordert es aber auch, dass die Zusammensetzung des Luft-Kraftstoff-Gemisches und der Zündungszeitpunkt an das verwendete Kraftstoffgemisch (,insbesondere an dessen Zusammensetzung) angepasst werden, insbesondere dann wenn sich die Zusammensetzung des Kraftstoffgemischs ändert. Dazu ist es notwendig, das Kraftstoffgemisch bzw. die Kraftstoffsorte zu identifizieren. Der Stand der Technik sieht es vor, den Alkoholgehalt mit Hilfe eines Alkoholsensors zu ermitteln. Dabei ist es nachteilig, dass das Ermitteln der Kraftstoffzusammensetzung mit Mehrkosten verbunden ist, weil ein zusätzliches Detektionsmittel, wie z.B. ein Ethanolsensor, einzubauen ist.

EP 2 060 761 A1 offenbart eine FlexFuel-Brennkraftmaschine mit einem ersten Einspritzventil zum Einspritzen eines ersten Kraftstoffs und einem zweiten Einspritzventil zum Einspritzen eines zweiten Kraftstoffs, wobei in einem ersten Verfahrensschritt das erste Einspritzventil geschlossen bleibt und die Zusammensetzung des zweiten Kraftstoffs anhand eines Lambda-Werts des Abgases bestimmt wird.

### Offenbarung der Erfindung

Das erfindungsgemäße Verfahren zur Identifikation einer Kraftstoffsorte oder eines Kraftstoffgemisches, das sich aus mehreren Kraftstoffsorten zusammensetzt, für eine Brennkraftmaschine gemäß dem Hauptanspruch hat gegenüber dem Stand der Technik den Vorteil, dass kostengünstig und ohne großen Zusatzaufwand Rückschluss auf das Kraftstoffgemisch oder die Kraftstoffsorte genommen werden kann. Erfindungsgemäß ist es vorgesehen, dass in einem ersten Verfahrensschritt verhindert wird, dass Kraftstoff in eines der zum Brennraum führenden Saugrohre (d.h. das erste Saugrohr) gespritzt wird, wobei der Kraftstoff entweder aus einer von mehreren möglichen (d.h. für die Brennkraftmaschine vorgesehenen) Kraftstoffsorten oder aus einem Gemisch aus diesen Kraftstoffsorten besteht. Gleichzeitig wird während des ersten Verfahrensschritts dem Brennraum über das zweite Saugrohr bzw. über mehrere andere Saugrohre eine Ersatzkraftstoffmenge zugeführt, die der Kraftstoffmenge entspricht, die im Normalbetrieb in beide bzw. in alle Saugrohre eingespritzt wird.
Während des ersten Verfahrensschrittes verdampft Kraftstoff, der sich an der Wand des ersten Saugrohrs angelagert hat, und fettet das Luft-Kraftstoff-Gemisch an, das in den Brennraum geleitet wird, wobei das Maß des Anfettens abhängig ist vom verwendeten Kraftstoffgemisch oder der Kraftstoffsorte.
Das während des ersten Verfahrensschritts auftretende Anfetten des Luft-Kraftstoff-Gemischs lässt sich anhand der Änderung eines Lambda-Wertes, d.h. anhand einer Lambda-Wert-Änderung, feststellen. Eine Lambda-Sonde, die vorzugsweise am Ausgang des Brennraums bzw. der Mehrzahl von in der Brennkraftmaschine vorhandenen Brennräumen oder im Auspufftrakt angeordnet ist, ermittelt dabei den Lambda-Wert, der den Restsauerstoffgehalt im aus dem Brennraum austretenden Abgas quantifiziert. Insbesondere lässt sich während des ersten Verfahrensschritts ein Fettausflug, d.h. eine Abnahme des Lambda-Wertes, beobachten.

In einem zweiten Verfahrensschritt wird die erste Testkraftstoffmenge über das erste Einspritzventil in das erste Saugrohr und die zweite Testkraftstoffmenge über das zweite Einspritzventil in das zweite Saugrohr eingespritzt. Die Summe aus erster und zweiter Kraftstoffmenge entspricht dabei der vorbestimmten Kraftstoffmenge im Normalbetrieb bzw. der Ersatzkraftstoffmenge. Dieses führt dazu, dass sich im ersten Saugrohr an der Wand Kraftstoff anlagert und das dem Brennraum zugeführte Luft-Kraftstoff-Gemisch abmagert, wobei das Maß der Abmagerung abhängig ist vom verwendeten Kraftstoffgemisch oder der Kraftstoffsorte. Die Lambda-Wert-Änderung nimmt während des zweiten Verfahrensschritts die Form eines Magerausflugs an, d.h. der Lambda-Wert steigt.

Die Größe und Dauer von Fett- und/oder Magerausflug sind ein Maß für die quantitative Differenz zwischen Ist- und Sollkraftstoffmenge im Brennraum und hängen davon ab mit welchem Kraftstoffgemisch oder welcher Kraftstoffsorte die Brennkraftmaschine betrieben wird. Dadurch ist es erfindungsgemäß möglich, Größe und/oder Dauer von Fett-und/oder Magerausflug zur Identifikation der Kraftstoffsorte bzw. des Kraftstoffgemischs heranzuziehen. Insbesondere ist es vorgesehen, Kraftstoffgemische, die sich aus den gleichen Kraftstoffsorten in unterschiedlichen Mischverhältnissen zusammensetzen, mit Hilfe des erfindungsgemäßen Verfahrens zu erkennen. Dabei ist es besonders vorteilhaft, dass zur Identifikation der Kraftstoffsorte oder des Kraftstoffgemischs die bereits an der Brennkraftmaschine angebrachte Lambda-Sonde verwendet und dadurch auf ein zusätzliches, mit Mehrkosten verbundenes Detektionsmittel, wie z.B. ein Ethanolsensor, verzichtet wird. Verfügt die Brennkraftmaschine dennoch über einen zusätzlichen Ethanolsensor, kann die Identifikation gemäß dem Verfahren des Hauptanspruchs in vorteilhafter Weise zur Kontrolle und Diagnose des Ethanolsensors oder als Ersatz für einen defekten Ethanolsensor (z.B. bei dessen Ausfall) herangezogen werden.

In einer bevorzugten Ausführungsform der vorliegenden Erfindung wird unter Normalbedingungen die erste und die zweite Kraftstoffmenge und/oder im zweiten Verfahrensschritt die erste und die zweite Testkraftstoffmenge zu gleichen Teilen in das Saugrohr gespritzt. Dabei ist es vorteilhaft, dass die Einspritzventile baugleich sein können, wodurch zusätzliche Kosten vermieden werden, die durch die Produktion einer weiteren Sorte von Einspritzventilen entstehen.

In einer weiteren bevorzugten Ausführungsform der vorliegenden Erfindung wird die Lambda-Wert-Änderung im Verlauf des ersten Verfahrensschritts und/oder im Verlauf des zweiten Verfahrensschritts ermittelt. Wird die Lambda-Wert-Änderung nur im Verlauf des ersten oder nur im Verlauf des zweiten Verfahrensschritts erfasst, lässt sich in vorteilhafter Weise der Auswertungsaufwand der Lambda-Sonde reduzieren. Wird die Lambda-Wert-Änderung sowohl im Verlauf des ersten als auch im Verlauf des zweiten Verfahrensschritts festgestellt, ist es möglich, die Messgenauigkeit zu erhöhen. Dergleichen ist es möglich nur die Höhe des Lambdaausflugs (aufwandsminimiert) oder den Zeitlichen Lambdaverlauf (genauigkeitsoptimiert) auszuwerten.

In einer besonders bevorzugten Ausführungsform der vorliegenden Erfindung, wird anhand der Lambda-Wert-Änderung die Kraftstoffsorte oder das Kraftstoffgemisch, insbesondere seine Zusammensetzung, identifiziert und auf Basis der gewonnen Information wird anschließend in einem dritten Verfahrensschritt für den Normalbetrieb die eingespritzte Kraftstoffmenge an die verwendete Kraftstoffsorte oder das Kraftstoffgemisch angepasst, indem beispielsweise die Einspritzdauer verändert wird. Dadurch ergibt sich vorteilhaft, dass der Betrieb der Brennkraftmaschine emissionsärmer bzw. leistungsoptimierter erfolgen kann, da keine für die Verbrennung unnötige Menge an Kraftstoff bzw. eine zu geringe Menge an Kraftstoff in den Brennraum gespritzt wird (insbesondere im Vergleich zu dem Fall, in dem keine Anpassung an die jeweilige Kraftstoffsorte oder das jeweilige Kraftstoffgemisch erfolgt).

Ebenfalls kann die Identifikation der Kraftstoffsorte oder des Kraftstoffgemischs dazu genutzt werden, um den Zündungszeitpunkt im Brennraum im Normalbetrieb anzupassen, wobei der für einen emissionsarmen und leistungsoptimierten Betrieb der Brennkraftmaschine optimale Zeitpunkt abhängig ist vom Kraftstoffgemisch oder der Kraftstoffsorte. Durch das Verfahren der vorliegenden Erfindung ergibt sich der Vorteil, dass nach der Identifikation der Kraftstoffsorte oder des Kraftstoffgemischs es vorgesehen ist, den Zündungszeitpunkt an die verwendete Kraftstoffsorte oder das verwendete Kraftstoffgemisch anzupassen, wodurch ein emissionsarmer bzw. leistungsoptimierter Betrieb der Brennkraftmaschine realisiert wird. Dabei ist es aus genannten Gründen (d.h. um den emissionsarmen und leistungsoptimierten Betrieb zu ermöglichen) in einer besonders bevorzugten Variante des Verfahrens gemäß der vorliegenden Erfindung von Vorteil, wenn sowohl die eingespritzte Kraftstoffmenge als auch Zündungszeitpunkt an die identifizierte Kraftstoffsorte bzw. an das identifizierte Kraftstoffgemisch angepasst werden.

In einer bevorzugten Ausführungsform handelt es sich bei der Brennkraftmaschine um eine FlexFuel-Brennkraftmaschine und die Identifikation des Kraftstoffgemisches wird dazu genutzt, die Gemischbildung, d.h. die für den Brennraum vorgesehene Zusammensetzung aus Sauerstoff und Kraftstoffmenge, und Zündungszeitpunkt des Luft-Kraftstoff-Gemisches für einen möglichst emissionsarmen und verbrauchsoptimierten Nutzungsbetrieb einzustellen. Dabei wird in vorteilhafter Weise auf einen Alkoholsensor, insbesondere einen Ethanolsensor, verzichtet, der in der Regel für den Betrieb einer FlexFuel-Brennkraftmaschine vorgesehen ist und damit Mehrkosten in der Produktion der Brennkraftmaschine verursacht.

In einer bevorzugten Ausführungsform der vorliegenden Erfindung erfolgt das Verfahren zur Identifikation der Kraftstoffsorte bzw. des Kraftstoffgemischs, nachdem die Kraftstoffsorte oder das Kraftstoffgemisch gewechselt wurde. Dadurch ergibt sich der Vorteil, dass die Kraftstoffsorte oder das Kraftstoffgemisch für den Betrieb der Brennkraftmaschine gewechselt werden kann, ohne dass zu befürchten ist, dass die zur Einspritzung gedachte Kraftstoffmenge nicht an die neue Kraftstoffsorte bzw. das neue Kraftstoffgemisch angepasst ist. Es ist vielmehr vorgesehen, dass die neue Kraftstoffsorte oder das neue Kraftstoffgemisch identifiziert wird und anschließend die Parameter, d.h. eingespritzte Kraftstoffmenge und/oder Zündungszeitpunkt, angepasst werden, um dadurch vorteilhaft den emissionsarmen und leistungsoptimierten Betrieb der Brennkraftmaschine sicherzustellen, auch wenn die Kraftstoffsorten oder Kraftstoffgemische gewechselt wurden oder ein Wechsel von Kraftstoffsorte zu Kraftstoffgemisch oder umgekehrt erfolgte.

In einer weiteren bevorzugten Ausführungsform ist die in die zum Betrieb der Brennkraftmaschine eingeführte Kraftstoffsorte oder das eingeführte Kraftstoffgemisch unbekannt. In diesem Fall ist es erfindungsgemäß vorgesehen, dass die dann gemessene Lambda-Wert-Änderung der Kraftstoffsorte oder dem Kraftstoffgemisch zugeordnet wird. Insbesondere ist es vorgesehen, dass die neu erworbene Information (nämlich das zu dem unbekannten Kraftstoff die gemessene Lambda-Wert-Änderung gehört) gespeichert wird und beim nächsten erfindungsgemäßen Verfahren herangezogen wird, um die Kraftstoffsorte oder das Kraftstoffgemisch zu identifizieren. Dadurch ergibt sich vorteilhaft, dass die Zahl an verwendbaren Kraftstoffsorten oder Kraftstoffgemischen, für die Kraftstoffeinspritzung und Zündungszeitpunkt angepasst werden können, mit der Laufzeit der Brennkraftmaschine erhöht werden kann.

In einer weiteren Ausführungsform ist die Kraftstoffmenge oder das Kraftstoffgemisch bekannt, und trotz der Anpassung der eingespritzten Kraftstoffmenge wird eine Änderung des Lambda-Wertes, z.B. im Normalbetrieb der Brennkraftmaschine, festgestellt. Eine solche Situation tritt dann auf, wenn sich beispielsweise Verunreinigungen am Saugrohr anlagern. Wenn diese Situation eintritt, wird zu viel oder zu wenig Kraftstoffmenge in den Brennraum gespritzt, obwohl die eingespritzte Kraftstoffmenge an die Kraftstoffsorte bzw. das Kraftstoffgemisch angepasst wurde. Für einen solchen Fall ist es gemäß einer Ausführungsvariante der vorliegenden Erfindung vorgesehen, dass für das jeweilige Kraftstoffgemisch bzw. die jeweilige Kraftstoffsorte die einzuspritzende Kraftstoffmenge erneut angepasst wird. Der Vorteil dieser Ausführungsvariant der vorliegenden Erfindung ist es, dass der leistungsoptimierte bzw. emissionsarme Betrieb der Brennkraftmaschine über die Lebensdauer der Brennkraftmaschine sichergestellt werden kann.

In einer weiteren bevorzugten Ausführungsform der vorliegenden Erfindung ist es vorgesehen, dass die Einspritzung des Kraftstoffs computergesteuert erfolgt.

Ausführungsbeispiele der vorliegenden Erfindung sind in den Zeichnungen dargestellt und in der nachfolgenden Beschreibung näher erläutert.

### Kurze Beschreibung der Zeichnungen

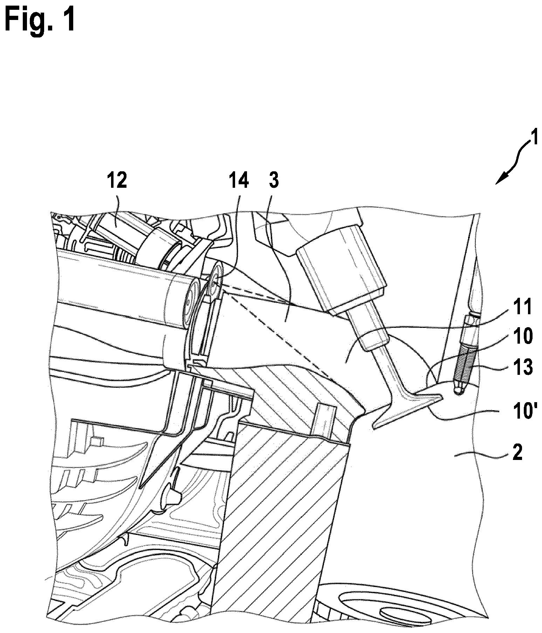

Es zeigen
**Figur 1** eine Illustration eines Teils einer Brennkraftmaschine,

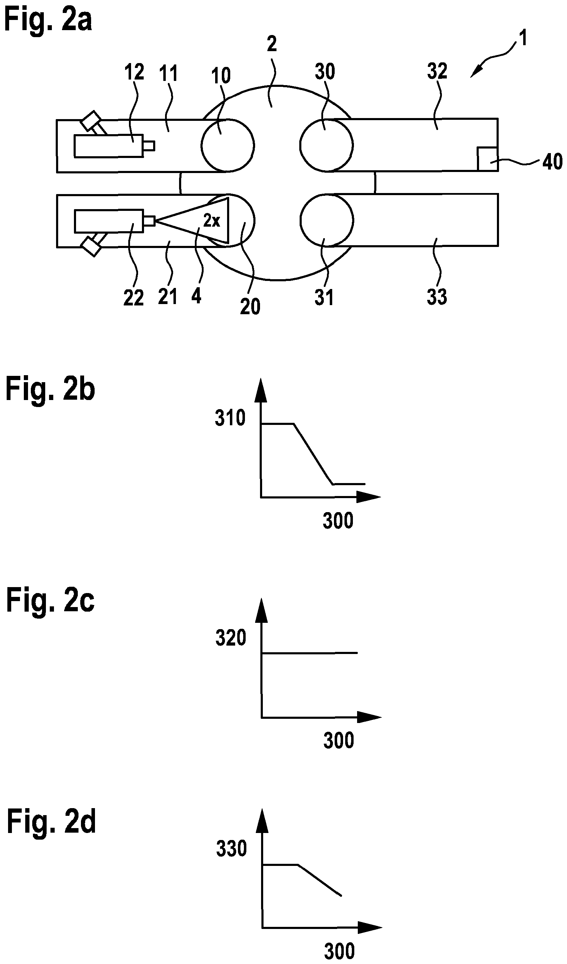

**Figur 2** **a** eine schematische Darstellung eines Teils der Brennkraftmaschine, welche einen ersten Verfahrensschritt eines Verfahrens gemäß einer beispielhaften Ausführungsform der vorliegenden Erfindung durchführt, wobei **Figur 2b** und **Figur 2 c** die zeitliche Änderung einer angelagerten Kraftstoffmenge zeigen und **Figur 2d** die zeitliche Änderung eines Lambda-Werts zeigt.

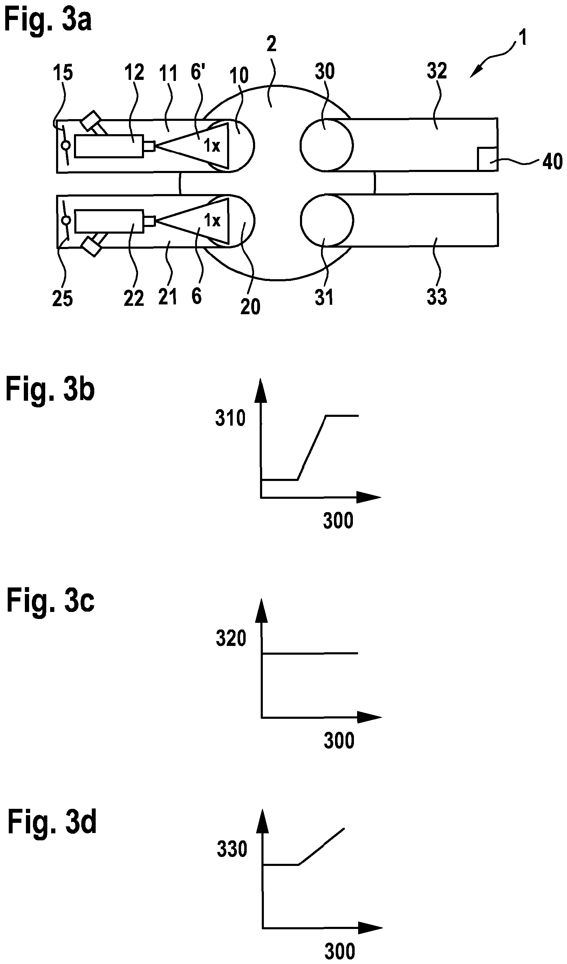

**Figur 3** **a** eine schematische Darstellung eines Teils der Brennkraftmaschine, welche einen zweiten Verfahrensschritt eines Verfahrens gemäß einer beispielhaften Ausführungsform der vorliegenden Erfindung durchführt, wobei **Figur 3b** und **Figur 3 c** die zeitliche Änderung einer angelagerten Kraftstoffmenge zeigen und **Figur 3d** die zeitliche Änderung eines Lambda-Werts zeigt.

### Ausführungsformen der Erfindung

In **Figur 1** ist eine Illustration eines Teils einer Brennkraftmaschine 1 gezeigt, die einen Brennraum 2, ein Einspritzventil 12, ein Einlassventil 10', ein Zündungsmittel 13, eine Einspritzventilöffnung 14, eine Einlassöffnung 10 und ein erstes Saugrohr 11 umfasst, während Kraftstoff 3 in das erste Saugrohr 11 in Richtung Brennraum eingespritzt wird, wobei auch ein zweites Saugrohr vorgesehen ist (nicht in der Figur 1 gezeigt). Der verwendete Kraftstoff kann dabei beispielsweise eine von einer Mehrzahl an möglichen Kraftstoffsorten sein oder ein Kraftstoffgemisch, das sich aus mehreren für den Betrieb der Brennkraftmaschine möglichen Kraftstoffsorten zusammensetzt. Der Kraftstoff wird beim Einspritzen in Form von Spraykegeln zerstäubt, was in Figur 1 mittels gestrichelter Linie dargestellt ist.

In **Figur 2a** und **Figur 2b** ist eine schematische Darstellung eines Teils der Brennkraftmaschine 1 dargestellt, welche einen ersten Verfahrensschritt eines Verfahrens gemäß einer beispielhaften Ausführungsform der vorliegenden Erfindung durchführt. Die Brennkraftmaschine weist den Brennraum 2, ein erstes und zweites Saugrohre 11 und 21 und pro Saugrohr wenigstens ein Einspritzventil, d.h. wenigstens zwei Einspritzventile 12,22 auf. Der Brennraum 2 ist so ausgestaltet, dass sich ein Kolben (nicht in der Figur gezeigt) darin bewegen kann und die Wandung des Brennraums zwei Einlassöffnungen 10,20, durch die ein Luft-Kraftstoff-Gemisch angesaugt wird, und zwei Auslassöffnungen 30,31, aus denen die Rohabgase nach dem Verbrennungsprozess des Luft-Kraftstoff-Gemisches aus dem Brennraum 2 in Auslassrohre 32,33 ausgestoßen werden, aufweist. Am Ausgang des Brennraums 2 befindet sich üblicherweise eine Lambda-Sonde, die in der Lage ist, den Restsauerstoffgehalt des Abgases zu ermitteln. Im Normalbetrieb wird aus beiden Einspritzventilen 12,22 eine vorbestimmte Kraftstoffmenge in Richtung der jeweiligen Einlassöffnungen 10,20 in die Saugrohre 11,12 eingespritzt, wodurch sich zusammen mit der angesaugten Luft im jeweiligen Saugrohr ein Luft-Kraftstoff-Gemisch bildet. Die Menge der angesaugten Luft wird mittels einer Drosselklappe variiert. Wenn die Brennkraftmaschine 1 beispielsweise ein erhöhtes Drehmoment zur Verfügung stellen soll, öffnet sich die Drosselklappe. In diesem Fall erhöht sich der Druck im Saugrohr 11,21, die Verdampfungsneigung des Kraftstoffs sinkt und ein Teil des Kraftstoffs lagert sich an der Wand ab, wobei die angelagerte Kraftstoffmenge abhängt von der Kraftstoffsorte bzw. vom Kraftstoffgemisch. Zusammen mit Kraftstoff, der beim Einspritzen an die Wand gespritzt wurde, fehlt der an der Wand angelagerte Kraftstoff dem Luft-Kraftstoff-Gemisch, wenn es dem Brennraum 2 zugeführt wird. Beim Schließen der Drosselklappe sinkt der Saugrohrdruck, die Verdampfungsneigung des Kraftstoffs nimmt zu, der an der Saugrohrwand angelagerte Kraftstoff verdampft in das Volumen des Saugrohrs und wird schließlich dem Brennraum 2 zusätzlich zugeführt, wobei die verdampfte Kraftstoffmenge abhängt von der Kraftstoffsorte bzw. vom Kraftstoffgemisch.

**Figur 2** stellt einen ersten Verfahrensschritt dar, bei dem ein erstes Einspritzventil 12 über wenigstens einen Gesamtzyklus geschlossen wird, so dass kein Kraftstoff in das erste Saugrohr 11 eingespritzt wird und sich an dessen Wand der Wandfilm zurückbildet. Gleichzeitig spritzt das zweite Einspritzventil 22 eine Ersatzkraftstoffmenge 4 in das zweite Saugrohr 21 ein, dessen Menge genau der Kraftstoffmenge entspricht, die im Normalbetrieb aus beiden Einspritzventilen zusammen eingespritzt würde (in der Figur durch das fett gedruckte "2x" illustriert). **Figur 2b** zeigt, dass sich während des ersten Verfahrensschritts die Kraftstoffanlagerung an der Wand des ersten Saugrohrs 310 mit der Zeit 300 abnimmt. Die Kraftstoffanlagerung an der Wand des zweiten Saugrohres 320 bleibt hingegen konstant gegenüber der Zeit 300, wie es in **Figur 2c** dargestellt ist. Mit Hilfe der Lambda-Sonde stellt man fest, dass während der Rückbildung des Wandfilms der gemessene Lambda-Wert 330 mit der Zeit 300 abnimmt. Die Lambda-Wert-Änderung, wird als Fettausflug bezeichnet und wird in **Figur 2d** gezeigt.

In **Figur 3** wird der zweite Verfahrensschritt des Verfahrens gemäß einer beispielhaften Ausführungsform der vorliegenden Erfindung schematisch illustriert.
Im zweiten Verfahrensschritt wird das erste Einspritzventil 12 wieder geöffnet und eine erste Testkraftstoffmenge 6 wird in das erste Saugrohr 11 gespritzt. Die erste Testkraftstoffmenge 6 bildet zusammen mit einer zweiten Testkraftstoffmenge 6', die aus dem zweiten Einspritzventil 22 in das zweite Saugrohr 21 eingespritzt wird, eine Kraftstoffmenge, die der vorbestimmten Kraftstoffmenge aus dem Normalbetrieb bzw. der Ersatzkraftstoffmenge entspricht. Im ersten Saugrohr 11 lagert sich während des zweiten Verfahrensschritts erneut Kraftstoff an der Wand ab, d.h. die Kraftstoffanlagerung an der Wand des ersten Saugrohrs 310 nimmt mit der Zeit 300 zu. Dies ist in der **Figur 3b** dargestellt. **Figur 3c** zeigt, dass die Kraftstoffanlagerung an der Wand des zweiten Saugrohrs 320 konstant bleibt. Ebenso stellt man während des zweiten Verfahrensschritts fest, dass der Lambdawert 330 mit der Zeit 300 zunimmt. Dieses Ansteigen des Lambda-Wertes wird als Magerausflug bezeichnet und ist in **Figur 3d** dargestellt.

Sowohl Dauer und Größe des Fettausflugs, der aus dem in Figur 2 dargestellten ersten Verfahrensschritt ermittelt wird, als auch Größe und Dauer des Magerausflugs, der aus dem in Figur 3 dargestellten zweiten Verfahrensschritt ermittelt wird, sind abhängig von der von der Brennkraftmaschine verwendeten Kraftstoffsorte oder dem verwendeten Kraftstoffgemisch. Gemäß der vorliegenden Erfindung ist es vorgesehen, diese Abhängigkeit zur Identifikation der Kraftstoffsorte oder des Kraftstoffgemischs zu nutzen.

## Patentansprüche

1. Verfahren zur Identifikation einer Kraftstoffsorte oder eines Kraftstoffgemisches, das sich aus mehreren Kraftstoffsorten zusammensetzt, anhand einer Lambda-Wert-Änderung für den Betrieb einer einen Brennraum (2) aufweisenden Brennkraftmaschine (1), wobei die Brennkraftmaschine (1) mit unterschiedlichen Kraftstoffsorten oder Kraftstoffgemischen betreibbar ist, wobei der Brennraum eine erste Einlassöffnung (10) umfasst, die mit einem ersten Saugrohr (11) verbunden ist, in dem ein erstes Einspritzventil (12) angeordnet ist, wobei der Brennraum (2) eine zweite Einlassöffnung (20) umfasst, die mit einem zweiten Saugrohr (21) verbunden ist, in dem ein zweites Einspritzventil (22) angeordnet ist, wobei im Normalbetrieb eine vorbestimmte Kraftstoffmenge eingespritzt wird und wobei sich die vorbestimmte Kraftstoffmenge zusammensetzt aus einer ersten durch das erste Einspritzventil (12) einzuspritzenden Kraftstoffmenge und einer zweiten durch das zweite Einspritzventil (22) einzuspritzenden Kraftstoffmenge, **dadurch gekennzeichnet, dass** in einem ersten Verfahrensschritt das erste Einspritzventil (12) geschlossen bleibt und in einem zweiten Verfahrensschritt das erste Einspritzventil (12) wieder geöffnet wird, wobei im zweiten Verfahrensschritt eine erste Testkraftstoffmenge (6) über das erste Einspritzventil (12) und eine zweite Testkraftstoffmenge (6') über das zweite Einspritzventil (22) eingespritzt wird, wobei sich die erste Testkraftstoffmenge (6) und die zweite Testkraftstoffmenge (6') zur vorbestimmten Kraftstoffmenge zusammensetzen.

2. Verfahren gemäß Anspruch 1, **dadurch gekennzeichnet, dass** im Normalbetrieb die aus dem ersten Einspritzventil (12) gespritzte erste Kraftstoffmenge und die aus dem zweiten Einspritzventil (22) gespritzte zweite Kraftstoffmenge gleich ist und/oder dass im zweiten Verfahrensschritt die aus dem ersten Einspritzventil (12) gespritzte erste Testkraftstoffmenge und die aus dem zweiten Einspritzventil (22) gespritzte zweite Testkraftstoffmenge gleich ist.

3. Verfahren gemäß einem der vorangegangen Ansprüche, **dadurch gekennzeichnet, dass** die Lambda-Wert-Änderung zu Beginn und/oder im Verlauf des ersten und/ oder des zweiten Verfahrensschritts beobachtet wird.

4. Verfahren gemäß einem der vorangegangen Ansprüche, **dadurch gekennzeichnet, dass** das Kraftstoffgemisch oder die Kraftstoffsorte identifiziert wird, wobei in einem dritten Verfahrensschritt ein Normalbetrieb mit an das Kraftstoffgemisch oder die Kraftstoffsorte angepassten Kraftstoffmenge durchgeführt wird und/oder der Zündungszeitpunkt im Normalbetrieb an das Kraftstoffgemisch oder die Kraftstoffsorte angepasst wird.

5. Verfahren gemäß einem der vorangegangenen Ansprüche, **dadurch gekennzeichnet, dass** es sich bei der Brennkraftmaschine um eine FlexFuel-Brennkraftmaschine handelt.

6. Verfahren gemäß einem der vorangegangenen Ansprüche, **dadurch gekennzeichnet, dass** das Kraftstoffgemisch oder die Kraftstoffsorte identifiziert wird, nachdem das Kraftstoffgemisch oder die Kraftstoffsorte für den Betrieb der Brennkraftmaschine gewechselt wurde.

7. Verfahren gemäß einem der vorangegangenen Ansprüche, **dadurch gekennzeichnet, dass** das für den Betreib der Brennkraftmaschine verwendete Kraftstoffgemisch oder die Kraftstoffsorte nicht bekannt ist und die gemessene Lambda-Wert-Änderung dem Kraftstoffgemisch oder der Kraftstoffsorte zugeordnet wird.

8. Verfahren gemäß einem der vorangegangenen Ansprüche, **dadurch gekennzeichnet, dass** das für den Betreib der Brennkraftmaschine (1) verwendete Kraftstoffgemisch oder die Kraftstoffsorte bekannt ist, und eine im Normalbetrieb auftretende Lambda-Wert-Änderung eine erneute Anpassung der Kraftstoffmenge veranlasst, sobald eine über einen vorgegebenen Wert hinausgehende Veränderung der Emissionseigenschaften der Brennkraftmaschine (1) festgestellt wird.

9. Verfahren nach einem der vorhergegangenen Ansprüche, **wobei** die Kontrolle der eingespritzten Kraftstoffmenge computergesteuert erfolgt.

## Claims

1. Method for identifying a type of fuel or a mixture of fuel which is composed of a plurality of types of fuel, on the basis of a change in the lambda value for the operation of an internal combustion engine (1) having a combustion chamber (2), wherein the internal combustion engine (1) can be operated with different types of fuel or mixtures of fuel, wherein the combustion chamber comprises a first inlet opening (10) which is connected to a first intake manifold (11) in which a first injection valve (12) is arranged, wherein the combustion chamber (2) comprises a second inlet opening (20) which is connected to a second intake manifold (21) in which a second injection valve (22) is arranged, wherein during normal operation a predetermined quantity of fuel is injected, and wherein the predetermined quantity of fuel is composed of a first quantity of fuel which is to be injected by the first injection valve (12) and a second quantity of fuel which is to be injected by the second injection valve (22), **characterized in that** in a first method step the first injection valve (12) remains closed, and in a second method step the first injection valve (12) is opened again, wherein in the second method step a first test quantity (6) of fuel is injected via the first injection valve (12), and a second test quantity (6') of fuel is injected via the second injection valve (22), wherein the first test quantity (6) of fuel and the second test quantity (6') of fuel are combined to form the predetermined quantity of fuel.

2. Method according to Claim 1, **characterized in that** during normal operation the first quantity of fuel which is injected from the first injection valve (12) and the second quantity of fuel which is injected from the second injection valve (22) are the same, and/or **in that** in the second method step the first test quantity of fuel which is injected from the first injection valve (12) and the second test quantity of fuel which is injected from the second injection valve (22) are the same.

3. Method according to one of the preceding claims, **characterized in that** the change in the lambda value is observed at the start and/or in the course of the first and/or second method step.

4. Method according to one of the preceding claims, **characterized in that** the mixture of fuel or the type of fuel is identified, wherein in a third method step normal operation is carried out with a quantity of fuel which is adapted to the mixture of fuel or the type of fuel, and/or the ignition time during normal operation is adapted to the mixture of fuel or to the type of fuel.

5. Method according to one of the preceding claims, **characterized in that** the internal combustion engine is a FlexFuel internal combustion engine.

6. Method according to one of the preceding claims, **characterized in that** the mixture of fuel or the type of fuel is identified after the mixture of fuel or the type of fuel for the operation of the internal combustion engine has been changed.

7. Method according to one of the preceding claims, **characterized in that** the mixture of fuel or the type of fuel which is used for the operation of the internal combustion engine is not known and the measured change in the lambda value is assigned to the mixture of fuel or the type of fuel.

8. Method according to one of the preceding claims, **characterized in that** the mixture of fuel or the type of fuel which is used for the operation of the internal combustion engine (1) is known, and a change in the lambda value which occurs during normal operation brings about renewed adaptation of the quantity of fuel as soon as a change in the emission properties of the internal combustion engine (1) which exceeds a predefined value is detected.

9. Method according to one of the preceding claims, **wherein** the injected quantity of fuel is monitored under computer control.

## Revendications

1. Procédé d'identification d'un type de carburant ou d'un mélange de carburant qui se compose de plusieurs types de carburants, à l'aide d'une variation de la valeur lambda pour le fonctionnement d'un moteur à combustion interne (1) présentant une chambre de combustion (2), le moteur à combustion interne (1) pouvant fonctionner avec différents types de carburant ou différents mélanges de carburant, la chambre de combustion comprenant une première ouverture d'entrée (10) qui est connectée à un premier tuyau d'aspiration (11) dans lequel est disposée une première soupape d'injection (12), la chambre de combustion (2) comprenant une deuxième ouverture d'entrée (20) qui est connectée à un deuxième tuyau d'aspiration (21) dans lequel est disposée une deuxième soupape d'injection (22), une quantité de carburant prédéterminée étant injectée pendant le fonctionnement normal et la quantité de carburant prédéterminée se composant d'une première quantité de carburant injectée à travers la première soupape d'injection (12) et d'une deuxième quantité de carburant injectée à travers la deuxième soupape d'injection (22), **caractérisé en ce que** dans une première étape de procédé, la première soupape d'injection (12) reste fermée et dans une deuxième étape de procédé, la première soupape d'injection (12) est à nouveau ouverte, dans la deuxième étape de procédé, une première quantité de carburant d'essai (6) étant injectée par le biais de la première soupape d'injection (12) et une deuxième quantité de carburant d'essai (6') étant injectée par le biais de la deuxième soupape d'injection (22), la première quantité de carburant d'essai (6) et la deuxième quantité de carburant d'essai (6') se réunissant pour former la quantité de carburant prédéterminée.

2. Procédé selon la revendication 1, **caractérisé en ce que** pendant le fonctionnement normal, la première quantité de carburant injectée hors de la première soupape d'injection (12) et la deuxième quantité de carburant injectée hors de la deuxième soupape d'injection (22) sont identiques et/ou **en ce que** dans la deuxième étape de procédé, la première quantité de carburant d'essai injectée hors de la première soupape d'injection (12) et la deuxième quantité de carburant d'essai injectée hors de la deuxième soupape d'injection (22) sont identiques.

3. Procédé selon l'une quelconque des revendications précédentes, **caractérisé en ce que** la variation de la valeur lambda au début et/ou au cours de la première et/ou de la deuxième étape de procédé est observée.

4. Procédé selon l'une quelconque des revendications précédentes, **caractérisé en ce que** le mélange de carburant ou le type de carburant sont identifiés, dans une troisième étape de procédé, un fonctionnement normal avec une quantité de carburant adaptée au mélange de carburant ou au type de carburant étant effectué et/ou l'instant d'allumage pendant le mode de fonctionnement normal étant adapté au mélange de carburant ou au type de carburant.

5. Procédé selon l'une quelconque des revendications précédentes, **caractérisé en ce que** le moteur à combustion interne est un moteur à combustion interne à carburant modulable.

6. Procédé selon l'une quelconque des revendications précédentes, **caractérisé en ce que** le mélange de carburant ou le type de carburant est identifié après que le mélange de carburant ou le type de carburant a été changé pour le fonctionnement du moteur à combustion interne.

7. Procédé selon l'une quelconque des revendications précédentes, **caractérisé en ce que** le mélange de carburant ou le type de carburant utilisé pour le fonctionnement du moteur à combustion interne n'est pas connu et la variation de la valeur lambda mesurée est associée au mélange de carburant ou au type de carburant.

8. Procédé selon l'une quelconque des revendications précédentes, **caractérisé en ce que** le mélange de carburant ou le type de carburant utilisé pour le fonctionnement du moteur à combustion interne (1) est connu, et une variation de la valeur lambda se produisant pendant le fonctionnement normal provoque une adaptation renouvelée de la quantité de carburant dès qu'une variation des propriétés d'émission du moteur à combustion interne (1) dépassant une valeur prédéfinie est constatée.

9. Procédé selon l'une quelconque des revendications précédentes, dans lequel le contrôle de la quantité de carburant injectée s'effectue par commande par ordinateur.
